# EUROPÄISCHE PATENTSCHRIFT

(11) **EP 1 532 191 B1**
(45) Veröffentlichungstag und Bekanntmachung des Hinweises auf die Patenterteilung: **22.11.2006**
(21) Anmeldenummer: 03793668.9
(22) Anmeldetag: 01.08.2003
(51) Int. Cl.: C08G 63/685, C08G 63/78, C08G 18/46, C08G 73/16, C09D 175/06

(54) **WASSERVERDÜNNBARE POLYESTER MIT CYCLISCHER IMIDSTRUKTUR**
WATER-DILUTABLE POLYESTERS WITH A CYCLIC IMIDE STRUCTURE
POLYESTERS DILUABLES DANS L'EAU A STRUCTURE IMIDE CYCLIQUE

(30) Priorität: 14.08.2002 DE 10237194
(43) Veröffentlichungstag der Anmeldung: 25.05.2005
(73) Patentinhaber: Bayer MaterialScience AG, 51368 Leverkusen (DE)
(72) Erfinder: WAMPRECHT, Christian, 41472 Neuss (DE); VAN TREEK, Hans-Gerd, 47551 Bedburg-Hau (DE); PIRES, Raul, 50670 Köln (DE); FREUDENBERG, Ulrich, 50259 Pulheim (DE); REYER, Robert, 47918 Tönisvorst (DE)
(86) Internationale Anmeldenummer: PCT/EP2003/008529
(87) Internationale Veröffentlichungsnummer: WO 2004/022628

(56) Entgegenhaltungen:
- DE-A- 19 545 571
- US-A- 3 238 181
- US-A- 3 732 168
- US-A- 3 769 366
- US-A- 4 239 814
- US-A- 4 861 857
- LI C-H ET AL: "STUDIES ON THE SYNTHESIS AND PROPERTIES OF SOLUBLE HOMO- AND COPOLYESTER-IMIDE DERIVED FROM IMIDE-DIACID" JOURNAL OF APPLIED POLYMER SCIENCE, JOHN WILEY AND SONS INC. NEW YORK, US, Bd. 55, Nr. 5, 31. Januar 1995 (1995-01-31), Seiten 747-752, XP000516953 ISSN: 0021-8995
- DATABASE WPI Section Ch, Week 197424 Derwent Publications Ltd., London, GB; Class A23, AN 1974-44181V XP002260149 & JP 48 078293 A (TAKEDA CHEM INDS LTD), 20. Oktober 1973 (1973-10-20)

## Beschreibung

Die vorliegende Erfindung betrifft neue wässrige Lösungen oder Dispersionen enthaltend wasserverdünnbare Polyesterpolyole mit cyclischer Imidstruktur und deren Verwendung in Beschichtungsmitteln.

Aus dem Stand der Technik ist bekannt, dass Polyisocyanate mit freien Isocyanatgruppen und bestimmten ausgewählten Eigenschaften, wie z.B. Viskosität oder Hydrophilie in Kombination mit unterschiedlichen hydroxyfunktionellen Bindemitteln, beispielsweise Polyester, Polyacrylate oder Polyurethane in wässrigem Medium als Vernetzer unter verschiedenen Bedingungen eingesetzt werden können. Solche Systeme sind beispielsweise bekannt aus der EP-A 0 358 979, EP-A 0 469 389, EP-A 0 496 205, EP-A 0 537 568, EP-A 0 583 728, EP-A 0 654 053 und der DE-A 41 35 571.

Aus dem Stand der Technik sind ferner Wasserklarlacke auf der Basis spezieller Acrylatdispersionen und Aminoharzen, gegebenenfalls in Kombination mit verkappten Polyisocyanaten, bekannt. Beispiele hierfür sind in der EP-A 0 365 775, EP-A 0 363 723, EP-A 0 521 926 und EP-A 0 521 927 offenbart. Die dort aufgezählten Lacke sind jedoch für niedrige Einbrenntemperaturen nicht geeignet. Insbesondere ist eine Verarbeitung auf Kunststoffteilen nicht möglich.

Die DE-A 195 38 061 beschreibt wasserverdünnbare Polyester mit engen Zusammensetzungsverhältnissen, welche sowohl aromatische als auch cycloaliphatische säuregruppenhaltige Bausteine enthalten. Die beschriebenen Polyester werden vorzugsweise in Automobilklarlacken für die Automobilserienlackierung eingesetzt. Nachteilig ist bei diesen Polyestern die nicht ausreichende Hydrolysebeständigkeit.

Polymere mit cyclischen Imidstrukturen, z.B. Polyamidimide aus Diaminen bzw. Diisocyanaten, Tricarbonsäureanhydriden und ε-Caprolactam, werden häufig für hitzebeständige Beschichtungen bei der Drahtlackierung eingesetzt, wie in der DE-A 38 17 614 oder DE-A 33 32 031 offenbart. Auch Kombinationen mit modifizierten Polyestern sind beschrieben, z.B. in der DE-A 32 13 257. Diese Polymere sind jedoch nicht wasserverdünnbar.

Die Aufgabe der vorliegenden Erfindung bestand in der Bereitstellung von hydrolysebeständigen wässrigen bzw. wasserverdünnbaren Polyesterdispersionen oder -lösungen. Die Polyesterdispersionen sollten ferner zur Herstellung hochwertiger wässriger Zweikomponenten-Polyurethanlacke einsetzbar sein und die gestellten Anforderungen an die Lackeigenschaften, z.B. Trocknung, Oberflächengüte wie Härte, Glanz, Verlauf, Glätte, Fülle und Effekt, Polierfähigkeit und Beständigkeit gegen Wasser, chemische Agenzien oder atmosphärische Einflüsse, Bewitterung und mechanische Einflüsse erfüllen. Weiterhin sollten die erfindungsgemäßen wässrigen Lösungen oder Dispersionen auch eine solche Elastizität besitzen, dass sie sich zur Beschichtung von Kunststoffsubstraten eignen.

Diese Aufgabe konnte durch die Bereitstellung von wässrigen Lösungen oder Dispersionen enthaltend Polyester mit cyclischer Imidstruktur gelöst werden.

Gegenstand der Erfindung sind somit wässrigen Lösungen oder Dispersionen enthaltend Polyesterpolyole,
- die Struktureinheiten der allgemeinen Formel (I) enthalten 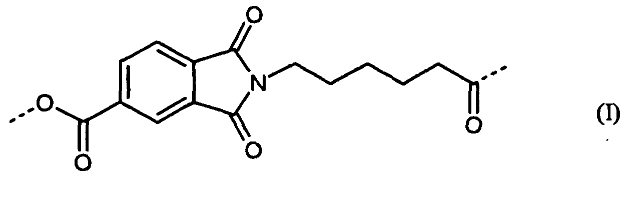
- und/oder die Struktureinheiten der allgemeinen Formel (II) enthalten, 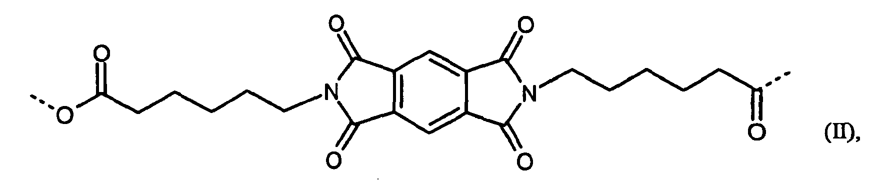
dadurch gekennzeichnet, dass die Polyesterpolyole freie Hydroxyl- und Carboxylgruppen aufweisen und die Säurezahl 20 bis 60 mg KOH/g beträgt.

Ebenfalls Gegenstand der vorliegenden Erfindung sind wässrige Lösungen oder Dispersionen enthaltend Polyesterpolyole, die als Endgruppen
- Struktureinheiten der allgemeinen Formel (III) enthalten, 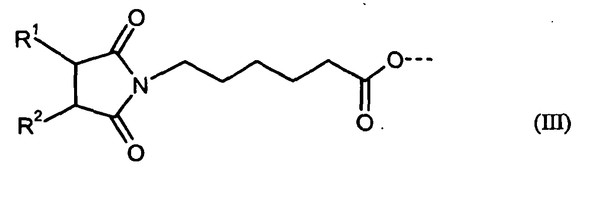
- und/oder Struktureinheiten der allgemeinen Formel (IV) enthalten, 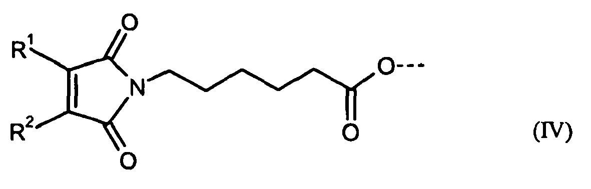
in welchen
R¹, R² unabhängig voneinander gleich oder verschieden sind und
- für Wasserstoff, Halogen, gegebenenfalls substituierte C₁-C₁₈-Alkyl-, C₂-C₁₈₋Alkenyl, C₂-C₁₈-Alkinyl, C₃-C₁₂-Cycloalkyl-, C₃-C₁₂-Heterocycloalkyl-, C₆₋C₂₄-Aryl-, C₆-C₂₄-Heteroaryl-, C₁-C₁₈-Alkoxy-, C₁-C₁₈-Alkylthio-, C₁-C₁₈₋Alkylamino-Reste stehen
   oder
- mit dem verbindenden C-Atom des C₄N-Fünfringes ein C₃-C₁₂-Cycloalkyl- oder C₂-C₁₃-Heterocycloalkylrest bilden, der gegebenenfalls Sauerstoff, Stickstoff und/oder Schwefel enthält
   oder
- beide zusammen mit den verbindenden C-Atomen des C₄N-Fünfringes ein annelliertes cyclisches oder polycyclisches Ringsystem bilden, welches gesättigt, ungesättigt, teilweise oder vollständig aromatisch ist, gegebenenfalls substituiert ist und gegebenenfalls Sauerstoff, Stickstoff und/oder Schwefel enthält,
dadurch gekennzeichnet, dass die Polyesterpolyole freie Hydroxyl- und Carboxylgruppen aufweisen und die Säurezahl 20 bis 60 mg KOH/g beträgt.

Die eingesetzten Polyesterpolyole weisen Hydroxylzahlen von 10 bis 400 mg KOH/g, bevorzugt von 15 bis 350 mg KOH/g und besonders bevorzugt von 20 bis 300 mg KOH/g, Säurezahlen von 5 bis 100 mg KOH/g, bevorzugt von 10 bis 80 mg KOH/g und besonders bevorzugt von 20 bis 60 mg KOH/g auf.

Geeignete Aufbaukomponenten für die Polyester sind Säurekomponenten (A), cyclische Lactame (B) und Alkoholkomponenten (C).

Als Säurekomponenten sind beispielsweise difunktionelle Carbonsäuren oder deren Derivate (A1) geeignet, wie aliphatische, cycloaliphatische oder aromatische difunktionelle Carbonsäuren oder deren Anhydride. Aliphatische difunktionelle Carbonsäuren sind z.B. aliphatische gesättigte Dicarbonsäuren wie Oxalsäure, Malonsäure, Dimethylmalonsäure, Bernsteinsäure, Adipinsäure, Glutarsäure, Azelainsäure, Pimelinsäure, Korksäure, Sebacinsäure oder die möglichen Anhydride dieser Säuren sowie ungesättigte Dicarbonsäuren wie z.B. Fumarsäure, Maleinsäure, Itaconsäure, Zitronensäure oder die möglichen Anhydride dieser Säuren. Bevorzugt sind Adipinsäure und Maleinsäureanhydrid. Cycloaliphatische difunktionelle Carbonsäuren sind z.B. Cyclopentandicarbonsäure, 1,3-, 1,4-Cyclohexandicarbonsäure, 2,5-Norbornendicarbonsäure, Endoethylencyclohexandicarbonsäure und Methyltetrahydrophthalsäure, Tetrahydrophthalsäure, Hexahydrophthalsäure oder die möglichen Anhydride dieser Säuren. Bevorzugt sind 1,4-Cyclohexandicarbonsäure, Tetrahydrophthalsäureanhydrid und Hexahydrophthalsäureanhydrid. Als aromatische difunktionelle Carbonsäuren sind z.B. Terephthalsäure, Isophthalsäure, Phthalsäure, Naphthalendicarbonsäure, Biphenyldicarbonsäure oder die möglichen Anhydride dieser Säuren geeignet, bevorzugt sind Phthalsäureanhydrid, Isophthalsäure und Terephthalsäure. Es ist ebenfalls möglich, Gemische der genannten Säuren bzw. Anhydride als Komponente (A1) einzusetzen.

Ebenfalls als Säurekomponente geeignet sind Carbonsäuren mit einer Funktionalität von größer 2 (A2), wie z.B. Trimellitsäure oder Trimesinsäure (Funktionalität = 3, (A2')) oder Pyromellitsäure oder Benzophenontetracarbonsäure (Funktionalität = 4, (A2")) oder die möglichen Anhydride dieser Säuren. Es ist ebenfalls möglich, Gemische der genannten Säuren bzw. Anhydride als Komponente (A2) einzusetzen.

Geeignete Monocarbonsäuren (A3) sind ausgewählt aus der Gruppe der aliphatischen, cycloaliphatischen oder aromatischen, gesättigten oder ungesättigten Monocarbonsäuren mit 1 bis 18 Kohlenstoffatomen, bevorzugt 1 bis 12 und besonders bevorzugt 1 bis 8 Kohlenstoffatomen, wie z.B. Ameisensäure, Essigsäure, Propionsäure, Buttersäure, Isobuttersäure, Valeriansäure, 2-Methylbutansäure, 3-Methylbutansäure, 2,2-Dimethylpropansäure, 2-Ethylbutansäure, 2-Ethylhexansäure, Octansäure, Decansäure, Dodecansäure, Tetradecansäure, Hexadecansäure, Octadecansäure, gesättigte und ungesättigte Fettsäuren, Cyclohexancarbonsäure, Cyclohexensäure und Benzoesäure oder die Anhydride dieser Säuren. Es ist ebenfalls möglich, Gemische dieser Säuren als Komponente (A3) einzusetzen. Bevorzugt sind 2-Ethylhexansäure, gesättigte und/oder ungesättigte Fettsäuren, Cyclohexansäure und Benzoesäure.

Cyclische Lactame (B) sind Verbindungen der allgemeinen Formel (V),
wobei 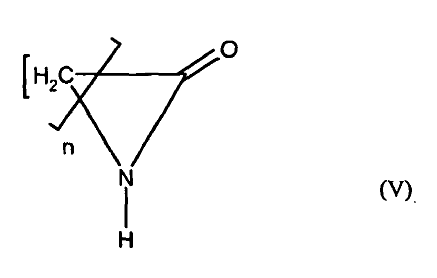
- n: für eine ganze Zahl von 3 bis 5 steht.

Geeignete Verbindungen der Komponente (B) sind z.B. γ-Butyrolactam und ε-Caprolactam, bevorzugt ist ε-Caprolactam.

Als Alkoholkomponente (C) sind geeignet
(C1) aliphatische oder cycloaliphatische C₃-C₁₀-Polyole mit einer Funktionalität größer 2,
(C2) aliphatische oder cycloaliphatische C₂-C₁₈-Diole,
(C3) aliphatische, cycloaliphatische oder araliphatische monofunktionelle C₁-C₁₈-Alkohole.

Bei der Komponente (C1) handelt es sich um aliphatische oder cycloaliphatische C₃-C₁₀-Polyole mit einer Funktionalität größer 2, wie z.B. Glycerin, Trimethylolethan, Trimethylolpropan, Pentaerythrit, Dipentaerythrit, Sorbit, Umsetzunsprodukte dieser Polyole mit ε-Caprolacton oder Alkylenoxiden. Bevorzugt sind C₃-C₈-Polyole, wie Glycerin, Trimethylolpropan und Petaerythrit. Es können auch Gemische der genannten Polyole als Komponente (C1) eingesetzt werden.

Bei der Komponente (C2) handelt es sich um aliphatische oder cycloaliphatische C₂-C₁₈-Diole, gegebenenfalls Ethersauerstoffatome enthaltende Alkohole, wie z.B. Ethylenglykol, Diethylenglykol, Triethylenglykol, Neopentylglycol, Propandiol-1,2 und -1,3, Dipropylenglykol, Butandiol-1,2, -1,3, -2,3 und -1,4, Pentandiol-1,5, 2,2-Diethylpropandiol, Hexandiol-1,6 und -2,5, 2-Methyl-2,4-pentandiol, 2-Methyl-1,3-propandiol, 2-Butyl-2-ethyl-1,3-propandiol, 3-Methyl-1,5-pentandiol, 2-Methyl-2-propyl-1,3-propandiol, 2,2-Diethyl-1,3-propandiol, Cyclohexan-1,4-dimethanol, Cyclohexandiol-1,2, -1,3 und -1,4, 2,2-Bis(4-hydroxycyclohexyl)-propan und Octa-hydro-4,7-methano-1H-indendimethanol oder Umsetzungsprodukte dieser Diole mit ε-Caprolacton oder Alkylenoxiden. Bevorzugt sind C₂-C₁₂-Diole. Gemische derartiger Diole können ebenfalls als Komponente (C2) verwendet werden. Bevorzugt sind Ethylenglykol, Diethylenglykol, Propandiol-1,2, Neopentylglykol, Hexandiol-1,6 und Cyclohexan-1,4-dimethanol.

Geeignete Verbindungen für Komponente (C3) sind aliphatische, cycloaliphatische oder araliphatische monofunktionelle C₁-C₁₈-Alkohole, wie z.B. Methanol, Ethanol, 1- und 2-Propanol, 1- und 2-Butanol, Isobutanol, tert.-Butanol, 1-, 2- und 3-Pentanol, 2-Methyl-1-butanol, 3-Methyl-1-butanol, 2,2-Dimethylpropanol, 1-, 2- und 3-Hexanol, 4-Methyl-2-pentanol, 2-Ethyl-1-butanol, 2,2-Dimethylpropanol, 1-Octanol, 2-Ethyl-1-hexanol, 1-Nonanol, Trimethyl-1-hexanol, 1-Decanol, 1-Dodecanol, 1-Tetradecanol, 1-Hexadecanol, 1-Octadecanol, Cyclohexanol, 2-, 3- und 4-Methylcyclohexanol, Hydroxymethylcyclohexan, 3,3,5-Trimethylcyclohexanol, 4-tert.-Butylcyclohexanol, Benzylalkohol, 1-Methyl-4t-isopropylcyclohexanol = (-)-Menthol, Decahydro-2-naphthol, (1R-endo)-1,7,7-Trimethyl-bicyclo[2,2,1]heptan-2-ol, (1R-exo)-1,7,7-Trimethyl-bicyclo-[2,2,1]heptan-2-ol und (1R)-6,6-Dimethylbicyclo[3,1,1]hept-2-en-2-methanol oder Umsetzungsprodukte dieser Monoalkohole mit ε-Caprolacton oder Alkylenoxiden. Bevorzugt sind C₁-C₁₂-Alkohole, wie z.B. 1- und 2-Butanol, Isobutanol, 2-Ethyl-1-hexanol, 1-Nonanol, 1-Decanol, 1-Dodecanol, Cyclohexanol, 3,3,5-Trimethylcyclohexanol, 4-tert.-Butylcyclohexanol, Benzylalkohol. Besonders bevorzugt sind C₁-C₁₀-Alkohole, wie z.B. 2-Ethyl-1-hexanol, Cyclohexanol, 3,3,5-Trimethylcyclohexanol, 4-tert.-Butylcyclohexanol und Benzylalkohol. Gemische derartiger Monoalkohole können ebenfalls als Komponente (C3) verwendet werden.

Gegenstand der Erfindung ist ebenfalls ein Verfahren zur Herstellung der erfindungsgemäßen wässrigen Lösungen oder Dispersionen durch
(I) Umsetzung eines Anhydrids der Trimellitsäure und/oder der Pyromellitsäure mit einem cyclischen Lactam (B),
(II) Aufbau eines hydroxyfunktionellen Polyesters durch Zugabe einer Alkoholkomponente (C) enthaltend
   - ein oder mehrere aliphatische oder cycloaliphatische C₃-C₁₀-Polyole mit einer Funktionalität größer 2 (C1) und/oder
   - ein oder mehrere aliphatische oder cycloaliphatische C₂-C₁₈-Diole (C2) und
   - gegebenenfalls ein oder mehrere aliphatische, cycloaliphatische oder araliphatische monofunktionelle C₁-C₁₈-Alkohole (C3),
      sowie gegebenenfalls Zugabe einer Säurekomponente (A) enthaltend
   - ein oder mehrere difunktionelle Carbonsäuren oder deren Anhydride (A1) und/oder
   - ein oder mehrere polyfunktionelle Carbonsäuren oder deren Anhydride (A2) und
   - gegebenenfalls ein oder mehrere Monocarbonsäuren (A3),
wobei anschließend der hydroxyfunktionelle Polyester entweder in Wasser eingetragen oder umgekehrt das Wasser zu dem Polyesterpolyol gerührt wird und ein Neutralisationsmittel vor, während oder nach der Überführung des Polyesterpolyols in die wässrige Phase zugegeben wird.

Gegenstand der Erfindung ist ebenfalls ein Verfahren zur Herstellung der erfindungsgemäßen wässrigen Lösungen oder Dispersionen durch
(I) Umsetzung eines Anhydrids einer difunktionellen Carbonsäure (A1) mit einem cyclischen Lactam (B),
(II) Aufbau eines hydroxyfunktionellen Polyesters durch Zugabe einer Alkoholkomponente (C) enthaltend
   - ein oder mehrere aliphatische oder cycloaliphatische C₃-C₁₀-Polyole mit einer Funktionalität größer 2 (C1) und/oder
   - ein oder mehrere aliphatische oder cycloaliphatische C₂-C₁₈-Diole (C2) und
   - gegebenenfalls ein oder mehrere aliphatische, cycloaliphatische oder araliphatische monofunktionelle C₁-C₁₈-Alkohole (C3),
      sowie gegebenenfalls durch Zugabe einer Säurekomponente (A) enthaltend
   - ein oder mehrer difunktionelle Carbonsäuren oder deren Anhydride (A1) und/oder
   - ein oder mehrere polyfunktionelle Carbonsäuren oder deren Anhydride (A2) und
   - gegebenenfalls ein oder mehrerer Monocarbonsäuren (A3),
wobei anschließend der hydroxyfunktionelle Polyester entweder in Wasser eingetragen oder umgekehrt das Wasser zu dem Polyesterpolyol gerührt wird und ein Neutralisationsmittel vor, während oder nach der Überführung des Polyesterpolyols in die wässrige Phase zugegeben wird.

Eine allgemeine Übersicht zur (präparativen) Herstellung von Polyesterpolyolen und den Reaktionsbedingungen wird beispielsweise in "Ullmanns Encyclopädie der Technischen Chemie", Verlag Chemie Weinheim, 4. Auflage (1980) Band 19, Seiten 61 ff. oder von H. Wagner und H. F. Sarx in "Lackkunstharze", Carl Hanser Verlag, München (1971), Seiten 86 bis 152 gegeben.

Zur Herstellung von wässrigen Dispersionen der erfindungsgemäßen Polyester werden die freien Carboxylgruppen mit einem Neutralisationsmittel neutralisiert.

In einer bevorzugten Ausführungsform des erfindungsgemäßen Verfahrens werden Säureanhydrid und Lactam, gegebenenfalls in Gegenwart von Alkoholen (C), ausgewählt aus der Gruppe (C1) bis (C3), in einer ersten Stufe miteinander umgesetzt, wobei Struktureinheiten mit cyclischen Imidgruppen entstehen. In einer zweiten Stufe erfolgt dann die Veresterung mit den restlichen Polyesterbausteinen, wie Säurekomponenten (A) und Alkoholkomponenten (C). Es ist bevorzugt, als Säurekomponente (A) zum Aufbau des Polyesters die Säurekomponente (A1) einzusetzen. Das erfindungsgemäße Verfahren wird bevorzugt in der Schmelze, gegebenenfalls in Gegenwart einer katalytischen Menge eines üblichen Veresterungskatalysators, wie z.B. Säuren, Basen oder Übergangsmetallverbindungen, wie z.B. Titantetrabutylat, Dibutylzinnoxid oder Butylzinnsäure, bei Temperaturen von 80 bis 270°C, bevorzugt von 100 bis 260°C, durchgeführt. Gegebenenfalls kann auch ein Schleppmittel, wie z.B. Xylol, zum Austragen des Reaktionswassers zugegeben werden. Die Veresterungsreaktion wird so lange durchgeführt, bis die angestrebten Werte für die Hydroxyl- und Säurezahl sowie für die Viskosität erreicht sind. Bevorzugt erfolgt in einer dritten Stufe die Umsetzung des hydroxyfunktionellen Polyesters mit einem Carbonsäureanhydrid, ausgewählt aus der Gruppe der 2fach-funktionellen Carbonsäuren (A1) und/oder 3fach-funktionellen Carbonsäuren (A2') unter Ringöffnung und Halbesterbildung.

Es ist grundsätzlich ebenfalls möglich, die Komponenten alle in einem Schritt zu den erfindungsgemäßen Polyestern umzusetzen.

Die entstandenen Carboxylgruppen der Polyesterpolyole können gegebenenfalls mit einem Neutralisationsmittel vollständig, teilweise oder überneutralisiert werden, wodurch der Polyester wasserverdünnbar wird. Dabei kann das Neutralisationsmittel vor, während oder nach der Überführung des Esters in die wässrige Phase zugegeben werden.

Zur Herstellung der erfindungsgemäßen Polyester-Dispersion wird das Polyesterpolyol, gegebenenfalls unter starker Scherung, wie z.B. starkem Rühren, entweder in das Wasser eingetragen oder man rührt umgekehrt Wasser zu dem Polyesterpolyol. Das Dispergiermedium kann dabei auch gleichzeitig das Neutralisationsmittel und/oder weitere Zusätze enthalten.

Geeignete Neutralisationsmittel (D) sind sowohl anorganische als auch organische Basen. Bevorzugt werden primäre, sekundäre und tertiäre Amine, wie z.B. Ammoniak, Ethylamin, Propylamin, Dimethylamin, Dibutylamin, Cyclohexylamin, Benzylamin, Morpholin, Piperidin, Diethanolamin und Triethanolamin verwendet. Bevorzugt werden tertiäre Amine, wie z.B. Triethylamin, N,N-Dimethylethanolamin, N,N-Diethylethanolamin, Triethanolamin, Triisopropylamin, N-Methylmorpholin, 2-Amino-2-methyl-propanol eingesetzt. Besonders bevorzugt sind N,N-Dimethylethanolamin, Triethanolamin und Triethylamin.

Üblicherweise werden die Neutralisationsmittel (D) in Mengen von 0,4 bis 1,3 Mol, bevorzugt von 0,5 bis 1,2 Mol und besonders bevorzugt 0,6 bis 1,1 Mol, bezogen auf je Mol freie Carboxylgruppen des Polyesters, eingesetzt.

Aus den erfindungsgemäßen Lösungen oder Dispersionen können Bindemittel für Zweikomponenten(2K)-Polyurethan-Lacke hergestellt werden. Im Falle von blockierten Polyisocyanaten und/oder Aminoharzen, wie beispielsweise Melaminharze, ist es ebenfalls möglich die erfindungsgemäßen Lösungen oder Dispersionen in Einkomponenten(1K)-Lacken einzusetzen. Bevorzugt ist die Verwendung in 2K-Polyurethan-Lacken.

Als Polyisocyanatkomponente können unblockierte oder blockierte Polyisocyanate eingesetzt werden, welche durch Modifizierung einfacher aliphatischer, cycloaliphatischer, araliphatischer und/oder aromatischer Diisocyanate, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur erhältlich sind, wie sie beispielsweise in J. Prakt. Chem. 336 (1994) Seite 185-200 beispielhaft beschrieben sind.

Geeignete Diisocyanate zur Herstellung der Polyisocyanate sind durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)-isocyanatomethylcyclohexan, Bis-(isocyanatomethyl)-norbornan, 1,3- und 1,4-Bis-(2-isocyanatoprop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Weiterhin sind auch Triisocyanate wie Triphenylmethan-4,4',4"-triisocyanat und/oder 4-Isocyanatomethyl-1,8-octandiisocyanat geeignet.

Bevorzugt werden Polyisocyanate oder Polyisocyanatgemische der genannten Art mit ausschließlich aliphatisch und/oder cycloaliphatisch gebundenen Isocyanatgruppen eingesetzt.

Besonders bevorzugt sind Polyisocyanate oder Polyisocyanatgemische mit Isocyanurat und/oder Biuretstruktur auf Basis von HDI, IPDI und/oder 4,4'-Diisocyanatodicyclohexylmethan.

Um eine bessere Einarbeitbarkeit der genannten Polyisocyanate in wässrige Bindemittel zu erzielen, sind die Polyisocyanate bevorzugt hydrophil modifiziert. Eingesetzt werden dazu nach an sich bekannten Methoden Polyisocyanate der oben genannten Art. Die Hydrophilierung kann z.B. anionisch, kationisch oder nichtionisch, über interne oder externe Emulgatoren erfolgen.

Durch interne Emulgatoren hydrophilierte Polyisocyanate sind z.B. solche, die durch Carboxylgruppen hydrophiliert wurden und sich nach Neutralisation der Carboxylgruppen sehr feinteilig in wässrige Systeme einrühren lassen, ohne dass hohe Scherkräfte erforderlich sind. Solche Polyisocyanate sind z.B. Gegenstand der EP-A 443138 und EP-A 510 438. Weiterhin sind durch Polyether hydrophil modifizierte Polyisocyanate einsetzbar. Die Herstellung solcher wasserdispergierbaren, urethangruppenhaltigen Polyisocyanate ist beispielsweise Gegenstand der EP-A 206 059, EP-A 540 985 und der US-P 5 200 489. Mit Polyethern hydrophil modifizierte, wasserdispergierbare, Allophanatgruppen aufweisende Polyisocyanate und deren Herstellung sind Gegenstand der EP-A 0 959 087. 2K-PUR-Lacke auf Basis diese Polyisocyanate sind Gegenstand der EP-A 959 115 und der EP-A 1 065 228.

Ebenfalls geeignet sind die in der EP-A 0 703 255 beschriebenen wasseremulgierbaren Polyisocyanate, die als ionische Emulgatoren Reaktionsprodukte aus Polyisocyanaten und beliebigen hydroxy-, mercapto- oder aminofunktionellen Verbindungen mit mindestens einer schwefelsauren Gruppe bzw. deren Anion enthalten. Als bevorzugte schwefelsaure Aufbaukomponenten zur Herstellung der Emulgatoren werden dabei Hydroxysulfonsäuren mit aliphatisch gebundenen OH-Gruppen oder die Salze solcher Hydroxysulfonsäuren genannt, beispielsweise spezielle Polyethersulfonate, wie sie z.B. unter der Bezeichnung Tegomer^{®} (Th. Goldschmidt AG, Essen, DE) gehandelt werden, Bisulfit-Addukte an ungesättigte Alkohole, Hydroxyethan- und Hydroxypropansulfonsäure sowie Aminosulfobetaine, die sich durch Quarternierung tertiärer Aminoalkohole mit 1,3-Propansulton herstellen lassen. Bevorzugt sind auch 2-(Cyclohexylamino)-ethansulfonsäure und 3-(Cyclohexylamino)-propansulfonsäure oder deren Salze als Hydrophilierungskomponenten.

Geeignete externe Emulgatoren sind beispielsweise anionische, wie solche auf Alkylsulfat-Basis, Alkylarylsulfonate, Alkylphenolpolyethersulfate wie z.B. in Houben-Weyl, Methoden der organischen Chemie, Erweiterungs- und Folgebände, 4. Auflage, Band E 20, 1987 (Teil 1, Seiten 259 bis 262) angegeben oder Alkylpolyethersulfate oder nichtionische Emulgatoren, wie z.B. die Alkoxylierungs-, bevorzugt Ethoxylierungsprodukte von Alkanolen, Phenolen oder Fettsäuren.

Die Polyisocyanate weisen einen NCO-Gehalt von 1 bis 45 Gew.-%, bevorzugt von 8 bis 25 Gew.-% auf. Sie können gegebenenfalls mit einem mit Wasser zumindest teilweise mischbaren, aber gegenüber Isocyanat-Gruppen inerten Lösungsmittel verdünnt werden.

Bevorzugt werden durch interne Emulgatoren hydrophilierte, urethangmppenhaltige Polyisocyanate, die z. B. Gegenstand der EP-A 540 985 sind und allophanatgruppenhaltige Polyisocyanate, die z.B. in der EP-A 0 959 087 beschrieben sind, eingesetzt. Besonders bevorzugt werden allophanatgruppenhaltige, Polyether-modifizierte Polyisocyanate eingesetzt, offenbart in der EP-A 0 959 087. Bevorzugt sind 60 bis 99 mol-% des Polyethers über Allophanatgruppen am Polyisocyanat gebunden.

Gegenstand der vorliegenden Erfindung ist auch ein Verfahren zur Herstellung wässriger Beschichtungsmittel, dadurch gekennzeichnet, dass in das Bindemittel, enthaltend die erfindungsgemäßen wässrigen Lösungen oder Dispersionen, die Polyisocyanatkomponente und gegebenenfalls weitere Bindemittel eingerührt oder einemulgiert werden.

Das Mengenverhältnis von Bindemittel- und Härterkomponente wird dabei so gewählt, dass auf jede Hydroxylgruppe der Harzkomponente 0,1 bis 3,0, bevorzugt 0,5 bis 2,0 und besonders bevorzugt 0,7 bis 1,7 Isocyanatgruppen der Härterkomponente entfallen.

Vor der Zugabe der Härterkomponente können der Bindemittel- oder der Härterkomponente, bevorzugt jedoch der Bindemittelkomponente, die üblichen Hilfs- und Zusatzmittel der Lacktechnologie einverleibt werden. Hierzu gehören beispielsweise Entschäumer, Verdicker, Verlaufsmittel, Pigmente, Füllstoffe, Emulgatoren, Dispergierhilfsmittel, Lichtschutzmittel und auch Lösemittel.

Die gewünschte Verarbeitungsviskosität wird in aller Regel durch die Zugabe von Lösemittel oder Wasser eingestellt. Um ganz bestimmte Verarbeitungsviskositäten einzustellen oder besondere rheologische Eigenschaften zu erzielen, ist es auch möglich, Verdickungsmittel oder Kombinationen von verschiedenen Verdickungsmitteln, z.B. ionische und assoziative Verdicker, einzusetzen.

Geeignete Substrate sind z.B. mineralische Baustoffoberflächen, Straßenbeläge, Holz und Holzwerkstoffe, metallische Oberflächen, Kunststoffe, Glas, Textilien, Gewebe oder Papier.

Die Beschichtungsmittel, enthaltend die erfindungsgemäßen wässrigen Lösungen oder Dispersionen, werden als Einkomponenten(1K)- oder auch als Zweikomponenten(2K)-Lacke verwendet.

Bevorzugt werden die Beschichtungsmittel, enthaltend die erfindungsgemäßen wässrigen Lösungen oder Dispersionen, als Grundierungen, Füller, pigmentierte Decklacke und Klarlacke im Bereich der Autoreparatur- und Großfahrzeuglackierung, der Allgemeinen Industrielackierung, der Kunststofflackierung sowie der Holzlackierung verwendet. Besonders bevorzugt sind die Verwendung für Anwendungen, in denen eine besonders hohe Applikationssicherheit, eine schnelle Trocknung, ein schneller Härteanstieg bei hoher Endhärte aber trotzdem guter Elastizität, eine sehr gute Optik, gekennzeichnet durch sehr guten Verlauf und hohen Glanz, sowie gute Beständigkeiten gegen Lösemittel, Chemikalien, Wasser und Witterung gefordert werden, wie z.B. in der Autoreparatur- und Großfahrzeuglackierung oder in der Allgemeinen Industrielackierung.

Ebenfalls Gegenstand der vorliegenden Erfindung ist die Verwendung der Beschichtungsmittel, enthaltend die erfindungsgemäßen wässrigen Lösungen oder Dispersionen zur Lackierung und/oder Verklebung von Substraten.

Die Beschichtungsmittel, enthaltend die erfindungsgemäßen wässrigen Lösungen oder Dispersionen, können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Streichen, Rollen, Gießen oder Rakeln auf die jeweiligen Substrate appliziert werden.

Gegenstand der vorliegenden Erfindung sind Substrate, beschichtet mit Beschichtungsmitteln, enthaltend die erfindungsgemäßen wässrigen Lösungen oder Dispersionen.

Die Trocknung und Aushärtung der Beschichtungen erfolgt im Allgemeinen unter normalen Temperaturbedingungen, d.h. ohne Erhitzung der Beschichtung. Die erfindungsgemäßen Beschichtungsmittel können jedoch auch zur Herstellung von Beschichtungen eingesetzt werden, die nach Applikation bei erhöhter Temperatur, z.B. bei 40 bis 250°C, bevorzugt bei 40 bis 150°C und besonders bevorzugt bei 40 bis 100°C getrocknet und ausgehärtet werden.

Die erfindungsgemäßen wässrigen Lösungen oder Dispersionen führen zu verbesserten Eigenschaften der daraus hergestellten Beschichtungen. Wässrige Zweikomponenten-Polyurethanlacke, enthaltend die erfindungsgemäßen wässrigen Lösungen oder Dispersionen, liefern Überzüge mit sehr schneller Trocknung, hoher Härte und zugleich guter Elastizität, hoher Beständigkeit gegen Lösemittel, Chemikalien und Wasser, sehr gutem Verlauf sowie sehr hohem Glanz. Die erfindungsgemäßen wässrigen Dispersionen auf Basis der beschriebenen Polyesterpolyole weisen im Vergleich zu den Polyesterdispersionen des Standes der Technik eine bessere Lagerbeständigkeit, selbst bei erhöhten Temperaturen von 40 bis 50°C, und eine bessere Hydrolysefestigkeit auf.

### Beispiele

In den folgenden Beispielen beziehen sich alle Prozentangaben auf das Gewicht.

Die Angabe "Festgehalt" wurde nach der Dickschichtmethode bestimmt, bei der eine definierte Probenmenge 1 h bei 125°C im Konvektionsofen eingetrocknet wird und der Festgehalt über die resultierende Gewichtsabnahme berechnet wird (Grundlage EN ISO 3251).

Die Säurezahl (mg KOH/g Probe) wurde durch Titration mit 0,1 mol/l NaOH-Lösung auf Grundlage der DIN 53402 bestimmt.

Die OH-Zahl (mg KOH/g Probe) wurde durch Acetylierung, Hydrolyse und anschließender Titration des freigesetzten HCl mit 0,1 mol/l NaOH auf Grundlage der DIN 53240 bestimmt.

Sofern nicht anders angegeben wurden die Viskositäten bei 23°C auf einen Rotationsviskosimeter VT 550 der Firma Haake GmbH, Karlsruhe, DE bestimmt.

Unter der Angabe "Lieferform" wird die vorliegende Lösung oder Dispersion der Polyesterpolyole verstanden; Unter "Festharz" wird der nichtflüchtige Harz-Anteil der vorliegenden Lösung oder Dispersion verstanden.

### Beispiel 1 Herstellung eines wasserverdünnbaren Polyesterpolyols I

334 g Neopentylglykol, 638 g 1,4-Cyclohexandimethanol, 733 g Trimellitsäureanhydrid und 432 g ε-Caprolactam wurden zusammen in einen Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff so auf 230°C aufgeheizt, dass die Kopftemperatur an der Kolonne 103°C nicht überstieg. Dabei schied sich das Reaktionswasser ab. Es wurde bis zu einer Säurezahl von ≤ 5 mg KOH/g kondensiert. Dann wurde auf 150°C abgekühlt und es wurden 870 g Neopentylglykol, 827 g Trimethylolpropan und 1874 g Phthalsäureanhydrid zugegeben. Anschließend wurde unter Rühren und Durchleiten von Stickstoff so auf 220°C aufgeheizt, dass die Kopftemperatur an der Kolonne 103°C nicht überstieg. Dabei schied sich weiter Reaktionswasser ab. Nach beendeter Destillation wurde der Wasserabscheider durch eine Destillationsbrücke ersetzt und die Reaktionsmischung so lange bei 220°C gerührt, bis die Kopftemperatur der Kolonne auf unter 90°C sank. Die Kolonne wurde entfernt und die Reaktionsmischung mit erhöhtem Stickstoffstrom bis zu einer Säurezahl von ≤ 5 mg KOH/g kondensiert. Danach wurde auf 140°C abgekühlt, 418 g Trimellitsäureanhydrid zugegeben und bei 170°C so lange gerührt, bis eine Säurezahl von ca. 35 mg KOH/g erreicht war. Bis zu diesem Zeitpunkt der Herstellung des Polyesters wurden durch Ziehen von Proben und weiteren Entnahmen insgesamt ca. 1770 g Polyesterharz entnommen. Danach wurde auf 130°C abgekühlt, 210 g Dipropylenglykoldimethylether zugegeben und 1 Stunde bei 100°C eingelöst. Dann wurde diese entstandene Lösung in eine auf 50°C erwärmte Mischung aus 134 g N,N-Dimethylethanolamin und 3174 g deionisiertem Wasser innerhalb 1 Stunde bei 50°C eingerührt. Das resultierende Produkt wurde mit weiterem Wasser auf einen Festgehalt von ca. 47 Gew.-% eingestellt. Es entstand eine bläulich schimmernde, opake Dispersion mit einem Festgehalt von 46,7 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 16,3 mg KOH/g (bezogen auf Lieferform), einer OH-Zahl von 116 mg KOH/g (bezogen auf Festharz) und einer Viskosität von 2306 mPa·s bei 23°C. Die Dispersion enthielt ca. 2,4 Gew.-% Dipropylenglykoldimethylether, ca. 1,7 Gew.-% N,N-Dimethylethanolamin und ca. 49,2 Gew.-% Wasser. Das Produkt ist weiter mit Wasser verdünnbar und zum Einsatz in wässrigen Zweikomponenten-Polyurethanlacken geeignet.

### Beispiel 2 Herstellung eines wasserverdünnbaren Polyesterpolyols II

Analog Beispiel 1 wurde ein wasserverdünnbares Polyesterpolyol bzw. ein wässriger Polyester aus folgenden Komponenten hergestellt: 1204 g Neopentylglykol, 638 g 1,4-Cyclohexandimethanol, 1111 g Trimellitsäureanhydrid, 432 g ε-Caprolactam, 827 g Trimethylolpropan, 1874 g Phthalsäureanhydrid, 210 g Dipropylenglykoldimethylether und 120 g N,N-Dimethylethanolamin. Das resultierende Produkt wurde mit Wasser auf einen Festgehalt von ca. 43 Gew.-% eingestellt. Es entstand eine bläulich schimmernde, opake Dispersion mit einem Festgehalt von 42,7 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 13,1 mg KOH/g (bezogen auf Lieferform), einer OH-Zahl von 117 mg KOH/g (bezogen auf Festharz) und einer Viskosität von 410 mPa·s bei 23°C. Die Dispersion enthielt ca. 2,3 Gew.-% Dipropylenglykoldimethylether, ca. 1,3 Gew.-% N,N-Dimethylethanolamin und ca. 53,4 Gew.-% Wasser. Das Produkt ist weiter mit Wasser verdünnbar und zum Einsatz in wässrigen Zweikomponenten-Polyurethanlacken geeignet.

### Beispiel 3 Herstellung eines wasserverdünnbaren Polyesterpolyols III

Analog Beispiel 1 wurde ein wasserverdünnbares Polyesterpolyol bzw. ein wässriger Polyester aus folgenden Komponenten hergestellt: 1197 g Neopentylglykol, 590 g 1,4-Cyclohexandimethanol, 1438 g Trimellitsäureanhydrid, 601 g ε-Caprolactam, 792 g Trimethylolpropan, 1571 g Phthalsäureanhydrid, 210 g Dipropylenglykoldimethylether und 134 g N,N-Dimethylethanolamin. Das resultierende Produkt wurde mit Wasser auf einen Festgehalt von ca. 45 Gew.-% eingestellt.

Es entstand eine bläulich schimmernde, opake Dispersion mit einem Festgehalt von 44,9 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 15,7 mg KOH/g (bezogen auf Lieferform), einer OH-Zahl von 109 mg KOH/g (bezogen auf Festharz) und einer Viskosität von 404 mPa·s bei 23°C. Die Dispersion enthielt ca. 2,4 Gew.-% Dipropylenglykoldimethylether, ca. 1,6 Gew.-% N,N-Dimethylethanolamin und ca. 51,0 Gew.-% Wasser. Das Produkt ist weiter mit Wasser verdünnbar und zum Einsatz in wässrigen Zweikomponenten-Polyurethanlacken geeignet.

### Beispiel 4 Herstellung eines wasserverdünnbaren Polyesterpolyols IV

Analog Beispiel 1 wurde ein wasserverdünnbares Polyesterpolyol bzw. ein wässriger Polyester aus folgenden Komponenten hergestellt: 1139 g Neopentylglykol, 533 g 1,4-Cyclohexandimethanol, 1646 g Trimellitsäureanhydrid, 723 g ε-Caprolactam, 760 g Trimethylolpropan, 1292 g Phthalsäureanhydrid, 210 g Dipropylenglykoldimethylether und 137 g N,N-Dimethylethanolamin. Das resultierende Produkt wurde mit Wasser auf einen Festgehalt von ca. 37 Gew.-% eingestellt. Es entstand eine bläulich schimmernde, opake Dispersion mit einem Festgehalt von 36,8 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 13,4 mg KOH/g (bezogen auf Lieferform), einer OH-Zahl von 98 mg KOH/g (bezogen auf Festharz) und einer Viskosität von 842 mPa·s bei 23°C. Die Dispersion enthielt ca. 1,9 Gew.-% Dipropylenglykoldimethylether, ca. 1,3 Gew.-% N,N-Dimethylethanolamin und ca. 59,8 Gew.-% Wasser. Das Produkt ist weiter mit Wasser verdünnbar und zum Einsatz in wässrigen Zweikomponenten-Polyurethanlacken geeignet.

### Beispiel 5 Herstellung eines wasserverdünnbaren Polyesterpolyols V

Analog Beispiel 1 wurde ein wasserverdünnbares Polyesterpolyol bzw. ein wässriger Polyester aus folgenden Komponenten hergestellt: 1137 g Neopentylglykol, 533 g 1,4-Cyclohexandimethanol, 1646 g Trimellitsäureanhydrid, 723 g ε-Caprolactam, 753 g Trimethylolpropan, 1330 g Hexahydrophthalsäureanhydrid, 210 g Dipropylenglykoldimethylether und 137 g N,N-Dimethylethanolamin. Das resultierende Produkt wurde mit Wasser auf einen Festgehalt von ca. 37 Gew.-% eingestellt. Es entstand eine bläulich schimmernde, opake Dispersion mit einem Festgehalt von 36,7 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 12,8 mg KOH/g (bezogen auf Lieferform), einer OH-Zahl von 99 mg KOH/g (bezogen auf Festharz) und einer Viskosität von 5345 mPa·s bei 23°C. Die Dispersion enthielt ca. 1,9 Gew.-% Dipropylenglykoldimethylether, ca. 1,3 Gew.-% N,N-Dimethylethanolamin und ca. 59,8 Gew.-% Wasser. Das Produkt ist weiter mit Wasser verdünnbar und zum Einsatz in wässrigen Zweikomponenten-Polyurethanlacken geeignet.

### Beispiel 6 Herstellung eines wasserverdünnbaren Polyesterpolyols VI

Analog Beispiel 1 wurde ein wasserverdünnbares Polyesterpolyol bzw. ein wässriger Polyester aus folgenden Komponenten hergestellt: 920 g Trimellitsäureanhydrid, 337 g ε-Caprolactam, 2056 g Trimethylolpropan, 858 g Hexahydrophthalsäureanhydrid, 463 g Isophthalsäure, 1284 g 2-Ethylhexansäure, 210 g N-Methylpyrrolidon und 157 g N,N-Dimethylethanolamin. Das resultierende Produkt wurde mit Wasser auf einen Festgehalt von ca. 45 Gew.-% eingestellt. Es entstand eine bläulich schimmernde, opake Dispersion mit einem Festgehalt von 45,0 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 19,1 mg KOH/g (bezogen auf Lieferform), einer OH-Zahl von 112 mg KOH/g (bezogen auf Festharz) und einer Viskosität von 2075 mPa·s bei 23°C. Die Dispersion enthielt ca. 2,4 Gew.-% N-Methylpyrrolidon, ca. 1,8 Gew.-% N,N-Dimethylethanolamin und ca. 50,8 Gew.-% Wasser. Das Produkt ist weiter mit Wasser verdünnbar und zum Einsatz in wässrigen Zweikomponenten-Polyurethanlacken geeignet.

### Beispiel 7 Herstellung eines wasserverdünnbaren Polyesterpolyols VII

Analog Beispiel 1 wurde ein wasserverdünnbares Polyesterpolyol bzw. ein wässriger Polyester aus folgenden Komponenten hergestellt: 1349 g Trimellitsäureanhydrid, 590 g ε-Caprolactam, 1896 g Trimethylolpropan, 383 g Hexahydrophthalsäureanhydrid, 413 g Isophthalsäure, 1284 g 2-Ethylhexansäure, 210 g N-Methylpyrrolidon und 155 g N,N-Dimethylethanolamin. Das resultierende Produkt wurde mit Wasser auf einen Festgehalt von ca. 48 Gew.-% eingestellt. Es entstand eine bläulich schimmernde, opake Dispersion mit einem Festgehalt von 47,9 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 19,4 mg KOH/g (bezogen auf Lieferform), einer OH-Zahl von 100 mg KOH/g (bezogen auf Festharz) und einer Viskosität von 2536 mPa·s bei 23°C. Die Dispersion enthielt ca. 2,5-Gew.-% N-Methylpyrrolidon, ca. 2,0 Gew.-% N,N-Dimethylethanolamin und ca. 47,5 Gew.-% Wasser. Das Produkt ist weiter mit Wasser verdünnbar und zum Einsatz in wässrigen Zweikomponenten-Polyurethanlacken geeignet.

### Beispiel 8, Vergleich: Herstellung eines wasserverdünnbaren Polyesterpolyols IX

Polyesterpolyol hergestellt analog Beispiel 1, jedoch sind Trimellitsäureanhydrid und ε-Caprolactam aus dem ersten Kondensationsschritt durch Isophthalsäure ersetzt worden.

Analog Beispiel 1 wurde ein wasserverdünnbares Polyesterpolyol bzw. ein wässriger Polyester aus folgenden Komponenten hergestellt: 1286 g Neopentylglykol, 574 g 1,4-Cyclohexandimethanol, 846 g Trimethylolpropan, 586 g Isophthalsäure, 2089 g Phthalsäureanhydrid, 418 g Trimellitsäureanhydrid, 210 g Dipropylenglykoldimethylether und 123 g N,N-Dimethylethanolamin. Das resultierende Produkt wurde mit Wasser auf einen Festgehalt von ca. 41 Gew.-% eingestellt. Es entstand eine bläulich schimmernde, opake Dispersion mit einem Festgehalt von 40,5 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 13,8 mg KOH/g (bezogen auf Lieferform), einer OH-Zahl von 115 mg KOH/g (bezogen auf Festharz) und einer Viskosität von 442 mPa·s bei 23°C. Die Dispersion enthielt ca. 2,2 Gew.-% Dipropylenglykoldimethylether, ca. 1,3 Gew.-% N,N-Dimethylethanolamin und ca. 55,5 Gew.-% Wasser. Das Produkt ist weiter mit Wasser verdünnbar und zum Einsatz in wässrigen Zweikomponenten-Polyurethanlacken geeignet.

### Beispiel 9, Vergleich: Herstellung eines wasserverdünnbaren Polyesterpolyols X

Polyesterpolyol hergestellt analog Beispiel 7, jedoch sind Trimellitsäureanhydrid und ε-Caprolactam im ersten Kondensationsschritt durch Isophthalsäure und Hexahydrophthalsäureanhydrid ersetzt worden.

Analog Beispiel 7 wurde ein wasserverdünnbares Polyesterpolyol bzw. ein wässriger Polyester aus folgenden Komponenten hergestellt: 2184 g Trimethylolpropan, 957 g Hexahydrophthalsäureanhydrid, 1032 g Isophthalsäure, 1272 g 2-Ethylhexansäure, 355 g Trimellitsäureanhydrid, 215 g N-Methylpyrrolidon und 157 g N,N-Dimethylethanolamin. Das resultierende Produkt wurde mit Wasser auf einen Festgehalt von ca. 45 Gew.-% eingestellt. Es entstand eine bläulich schimmernde, opake Dispersion mit einem Festgehalt von 44,0 Gew.-% an Polyesterpolyol (gemessen als nicht flüchtiger Anteil einer Dispersions-Probe, die in einem Umluftofen für 60 min. bei 125°C eingetrocknet wurde), einer Säurezahl von 16,7 mg KOH/g (bezogen auf Lieferform), einer OH-Zahl von 130 mg KOH/g (bezogen auf Festharz) und einer Viskosität von 210 mPa·s bei 23°C. Die Dispersion enthielt ca. 2,4 Gew.-% N-Methylpyrrolidon, ca. 1,8 Gew.-% N,N-Dimethylethanolamin und ca. 50,8 Gew.-% Wasser. Das Produkt ist weiter mit Wasser verdünnbar und zum Einsatz in wässrigen Zweikomponenten-Polyurethanlacken geeignet.

### Anwendungsbeispiele

Bei den nachfolgenden Anwendungsbeispielen wurden nach üblichen Methoden der Lacktechnologie pigmentierte Zweikomponenten-Polyurethanlacke für verschiedene Anwendungsgebiete hergestellt und unter üblichen Bedingungen auf Prüfbleche appliziert und ausgehärtet. Neben den spezifischen Lackeigenschaften für die einzelnen Anwendungen, wie z. B. Lösemittel- und Chemikalienbeständigkeit, Filmhärte und Flexibilität wurden hauptsächlich die Trocknungsgeschwindigkeit der Lacke, der Verlauf und der Glanz der Filme sowie die Wasserbeständigkeit beurteilt.

### Eingesetzte Produkte:

- Surfynol^{®} 104 E:: Entschäumendes Netzmittel, Air Products, vertrieben durch W. Biesterfeld & Co., Hamburg, DE
- Tronox^{®} R-KB-4:: Titandioxid-Pigment, Kerr McGee Pigments GmbH&Co. KG, DE
- Acrysol^{®} RM 8:: 20%ig in Ethanol, Verdicker, Rohm&Haas Deutschland GmbH, Frankfurt/Main, DE
- Byk^{®} 346: Verlaufsadditiv/Untergrundbenetzung, Byk Chemie, Wesel, DE
- Byk^{®} 380: Verlaufsadditiv/Antikratermittel, Byk Chemie, Wesel, DE
- Bayhydur^{®} VP LS 2319: Hydrophiliertes, aliphatisches Polyisocyanat, Bayer AG Leverkusen, DE
- Surfynol^{®} 104 BC: Entschäumendes Netzmittel, Air Products, vertrieben durch W. Biesterfeld & Co., Hamburg, DE
- Baysilone^{®} VP AI 3468: 10%ig in Butylglykol, Slip-Additiv, Borchers GmbH, Monheim, DE
- Borchigen^{®} SN 95: Netz- und Dispergiermittel, Borchers GmbH, Monheim, DE
- Borchigel^{®} PW 25: Verdickungsmittel, Borchers GmbH, Monheim, DE

### Beispiel 10

Weißer Zweikomponenten-Decklack für die allgemeine Industrielackierung auf Basis des Polyesterpolyols gemäß Beispiel 1.

### Komponente 1

Es wurde in einem handelsüblichen Dissolver (15 Min. bei einer Randgeschwindigkeit von 10 m/s) ein Mahlgut nach folgender Formulierung hergestellt:
33,00 Gew.-Teile Polyesterpolyol I
0,81 Gew.-Teile Surfynol^{®} 104 E
30,12 Gew.-Teile Titandioxid Tronox^{®} R-KB-4
3,13 Gew.-Teile entionisiertes Wasser

Das Mahlgut wurde mit Siliquarzperlen vom Durchmesser 2 mm in einem Skandex-Schüttler ca. 60 Minuten dispergiert. Danach wurde das Mahlgut durch Sieben von den Glasperlen abgetrennt und unter Rühren wurden die folgenden Lackkomponenten zugegeben (Auflackung):
12,20 Gew.-Teile Polyesterpolyol I (aus Beispiel 1)
0,55 Gew.-Teile Acrysol^{®} RM 8, 20%ig in Ethanol
0,21 Gew.-Teile Byk^{®} 346
0,32 Gew.-Teile Byk^{®} 380

Danach war die Komponente 1 (formulierte Polyolkomponente) für die weitere Verwendung einsatzbereit. Zur Herstellung eines Zweikomponentenlackes wurde die Komponente 1 mit dem Polyisocyanathärter (Komponente 2) gemischt. Die Komponente 2 enthält aus folgende Bestandteile:

### Komponente 2

15,73 Gew.-Teile Bayhydur^{®} VP LS 2319
3,93 Gew.-Teile Methoxypropylacetat
100,00 Gew.-Teile

Die Mischung der Komponenten 1 und 2 erfolgte innerhalb von 2 Minuten bei einer Rührerdrehzahl von 2000 U/min. Danach wurde der fertige Zweikomponentenlack durch Zugabe von Wasser auf eine Spritzviskosität von ca. 30 s (Auslaufzeit aus DIN-4mm-Becher bei 23°C) eingestellt. Der so eingestellte Weißlack wurde mittels einer handelsüblichen Spritzpistole (Sata Jet B, Düse 1,4 mm, Druck 3,5 bis 4 bar) auf Prüfbleche appliziert [Stahl: 20x10 cm, Aluminium: 15x7 cm, Zink: 16,5x6,5 cm und Unibond WH/60/OC (eisenphosphatierter Stahl): 20x10 cm] und nach 1 Tag, 7 Tagen und 14 Tagen bei Raumtemperaturtrocknung (23°C, 50% rel. Luftfeuchtigkeit) lacktechnisch geprüft.

Mittels eines Rakels (120 µm Spaltbreite) wurde der Lack auf Glasplatten appliziert und bei Raumtemperaturtrocknung die Antrocknung, die Dämpfungsdauer und der Glanz bestimmt. Das Potlife (Verdoppelung der Spritzviskosität) wurde durch Messung der Auslaufzeit (DIN-4 mm-Becher bei 23°C) ermittelt. Die Bestimmung der Antrocknung wurde gemäß DIN 53 150 durchgeführt. An den ausgehärteten Beschichtungen wurden folgende lacktechnische Eigenschaften geprüft:
- Glasplatten/Stahl:: Bestimmung des Glanzwertes (20°/60°) nach DIN 67 530
- Glasplatten:: Bestimmung der Dämpfungsdauer nach DIN 53 157
- Stahl-/Aluminium-/Zinkblech:: Prüfung der Haftung nach EN ISO 2409
- Stahlblech:: Prüfung der Erichsentiefung nach DIN ISO 1520
- Stahlblech:: Prüfung der Chemikalienbeständigkeit (Aceton/Xylol, 1 min/5 min Belastung)
- Unibond WH/60/OC:: Prüfung der Wasserbeständigkeit nach 16 Stunden Raumtemperaturtrocknung
- Glanz:: nach DIN 67 530
- Blasenbildung:: nach DIN 53 209
- Haftung:: nach EN ISO 2409

### Beispiel 11

Weißer Zweikomponenten-Decklack für die Großfahrzeuglackierung auf Basis des Polyesterpolyols I.

### Komponente 1

Es wurde in einem handelsüblichen Dissolver (15 Min. bei einer Randgeschwindigkeit von 10 m/s) ein Mahlgut nach folgender Formulierung hergestellt:
38,91 Gew.-Teile Polyesterpolyol I
1,09 Gew.-Teile Surfynol^{®} 104 BC
0,91 Gew.-Teile Baysilone^{®} VP AI 3468, 10%ig in Butylglykol
6,98 Gew.-Teile Borchigen^{®} SN 95
0,13 Gew.-Teile Borchigel^{®} PW 25
29,02 Gew.-Teile Titandioxid Tronox^{®} R-KB-4

Das Mahlgut wurde mit Siliquarzperlen vom Durchmesser 2 mm in einem Skandex-Schüttler ca. 60 Minuten dispergiert. Danach wurde das Mahlgut durch Sieben von den Glasperlen abgetrennt. Danach war die Komponente 1 (formulierte Polyolkomponente) für die weitere Verwendung einsatzbereit. Zur Herstellung eines Zweikomponentenlackes wurde die Komponente 1 mit dem Polyisocyanathärter (Komponente 2) gemischt. Die Komponente 2 enthielt folgende Bestandteile:

### Komponente 2

15,53 Gew.-Teile Bayhydur^{®} VP LS 2319
3,88 Gew.-Teile Methoxybutylacetat
100,00 Gew.-Teile

Die Mischung der Komponenten 1 und 2 erfolgte innerhalb von 2 Minuten bei einer Rührerdrehzahl von 2000 U/min. Danach wurde der fertige Zweikomponentenlack mit entionisiertem Wasser auf eine Spritzviskosität von ca. 25 s (Auslaufzeit aus DIN-4 mm-Becher bei 23°C) eingestellt. Der so eingestellte Weißlack wurde analog Beispiel 11 mittels einer handelsüblichen Spritzpistole des Tpys Sata Jet HVLP NR 2000 (1,3 mm Düse, Druck 3,5 bis 4 bar) der Firma Sata Farbspritztechnik GmbH, Kornwestheim, DE auf beschichtete Rundloch-Bleche, Maße: 150 x 300 mm, kommerziell erhältlich unter Artikel-Nr. 17542H11ME der Fa. Heinz Zanders, Liebigstraße 22, 42719 Solingen, DE appliziert. Die Aushärtung erfolgte bei 30 Min. 60°C und anschließend bei Raumtemperatur.

### Beispiele 12 bis 15

Analog Beispiel 10 wurden weiße Zweikomponenten-Decklacke für die allgemeine Industrielackierung auf Basis der Polyesterpolyole II (Beispiel 2), III (Beispiel 3), IV (Beispiel 4) und V (Beispiel 5) hergestellt und appliziert.

### Beispiele 16 und 17

Analog Beispiel 11 werden weiße Zweikomponenten-Decklacke für die Großfahrzeuglackierung auf Basis der Polyesterpolyole VI (Beispiel 6) und VII (Beispiel 7) hergestellt und appliziert.

### Vergleichsbeispiel 18

Analog Beispiel 10 wurde ein weißer Zeikomponenten-Decklack für die allgemeine Industrielackierung auf Basis des Polyesterpolyols IX hergestellt und appliziert.

### Vergleichsbeispiel 19

Analog Beispiel 11 wurde ein weißer Zeikomponenten-Decklack für die Großfahrzeuglackierung auf Basis des Polyesterpolyols X hergestellt und appliziert.

### Prüfergebnisse von wässrigen Zweikomponenten-Polyurethanlacken auf Basis der Polyesterpolyole I bis V und IX (allgemeine Industrielackierung):

**Tabelle 1 Prüfergebnisse der lacktechnischen Prüfungen**

| **Lack aus Beispiel Nr.** | | **10** | **12** | **13** | **14** | **15** | **18** |
|---|---|---|---|---|---|---|---|
| Potlife, h | | 6 | 5 | 5 | 5 | 5 | 6 |
| Trocknung, T1/T3 in h | | 1/5 | 0,5/5 | 0,5/5 | 1/5,5 | 1/5,5 | 1,5 / 5,5 |
| Pendeldämpfung, s nach | 1 d | 113 | 95 | 101 | 85 | 82 | 110 |
| | 7 d | 129 | 102 | 110 | 99 | 93 | 115 |
| | 14 d | 130 | 104 | 113 | 103 | 97 | 118 |
| Erichsendehnung, mm n. | 14 d | 10,0 | 8,6 | 8,0 | 9,3 | 9,4 | 7,4 |
| Glanz 20° / 60° | | 88 / 96 | 88 / 96 | 88 / 96 | 87 / 97 | 86 / 94 | 89 / 96 |
| Beständigkeit¹⁾ gegen | 1 d | 2/2 | 1/2 | 1/2 | 1/2 | 1/2 | 2/2 |
| Xylol/Aceton | 7 d | 1/2 | 0/2 | 0/2 | 1/2 | 0/2 | 1/2 |
| 5 min Einwirkdauer | 14 d | 1/2 | 0/2 | 0/2 | 0/2 | 0/2 | 1/2 |
| Beständigkeit²⁾ nach | 1 d | 74/95 | 76/93 | 79/94 | 72/95 | 69/91 | 70/93 |
| gegen Wasser | 7 d | 73/92 | 73/89 | 75/90 | 68/87 | 65/84 | 11/28 |
| | 14 d | 53/83 | 51/76 | 53/79 | 49/72 | 48/70 | - |
| Haftung¹⁾ auf Stahl nach | 1 d | 2 | 1 | 1 | 1 | 0 | 2 |
| | 7 d | 2 | 1 | 1 | 0 | 0 | 2 |
| | 14 d | 2 | 1 | 1 | 1 | 1 | 1 |
| Haftung¹⁾ auf Zink nach | 1 d | 2 | 1 | 1 | 1 | 1 | 1 |
| | 7 d | 2 | 1 | 1 | 1 | 0 | 2 |
| | 14 d | 2 | 1 | 1 | 1 | 1 | 1 |
| Haftung¹⁾ auf Alu nach | 1 d | 2 | 1 | 1 | 1 | 1 | 2 |
| | 7 d | 2 | 1 | 1 | 1 | 1 | 2 |
| | 14 d | 2 | 1 | 1 | 1 | 1 | 2 |
| Haftung¹⁾ auf Unibond | 1 d | 2 | 1 | 1 | 1 | 1 | 2 |
| | 7 d | 2 | 2 | 2 | 2 | 2 | 5 |
| | 14 d | 2 | 3 | 2 | 3 | 3 | - |

| | | | | | | | |
|---|---|---|---|---|---|---|---|
| ¹⁾0 = bester Wert (ohne Befund), 5 = schlechtester Wert (Film völlig aufgelöst bzw. keine Haftung mehr) ²⁾Wasserlagerungstest: Bestimmung des Glanzes nach Tagen, je höher der Wert, desto besser | | | | | | | |

### Prüfergebnisse von wässrigen Zweikomponenten-Polyurethanlacken auf Basis der Polyesterpolyole I, VI, VII und X (Großfahrzeuelackierung):

**Tabelle 2 Prüfergebnisse der lacktechnischen Prüfungen**

| **Lack aus Beispiel Nr.** | | **11** | **16** | **17** | **19** |
|---|---|---|---|---|---|
| Potlife, h | | 6 | 6 | 6 | 6 |
| Trocknung, T1/T3 in h | | 2 / 6 | 2,5 / 6 | 2 / 6 | 3 / 8 |
| Pendel dämpfung, s nach | 1 d | 126 | 64 | 120 | 73 |
| | 4 d | 176 | 116 | 154 | 94 |
| | 7 d | 175 | 116 | 161 | 98 |
| Erichsendehnung, mm nach | 14 d | 10,0 | 10,0 | 10,0 | 10,0 |
| Glanz 20° | | 96 | 90 | 88 | 87 |
| Haze | | 20 | 22 | 25 | 35 |
| Beständigkeit¹⁾ nach | 1 d | 1 | 2 | 2 | 2 |
| gegen Xylol | 4 d | 1 | 1 | 1 | 2 |
| 5 min. | 7 d | 1 | 1 | 1 | 1 |
| Beständigkeit¹⁾ nach | 1 d | 1 | 2 | 2 | 2 |
| gegen MPA | 4 d | 1 | 2 | 1 | 2 |
| 5 min. Einwirkdauer | 7 d | 1 | 1 | 1 | 1 |
| Beständigkeit¹⁾ nach | 1 d | 1 | 1 | 2 | 2 |
| gegen Superbenzin | 4 d | 1 | 1 | 1 | 2 |
| 5 min. Einwirkdauer | 7 d | 1 | 1 | 1 | 1 |
| Beständigkeit1) nach | 1 d | 1 | 2 | 2 | 3 |
| gegen Wasser | 4 d | 1 | 1 | 1 | 3 |
| 1 h Einwirkdauer | 7 d | 1 | 1 | 1 | 2 |

| | | | | | |
|---|---|---|---|---|---|
| ¹⁾0 = bester Wert (ohne Befund), 5 = schlechtester Wert (Film völlig aufgelöst bzw. keine Haftung mehr) ²⁾Wasserlagerungstest: Bestimmung des Glanzes nach Tagen, je höher der Wert, desto besser | | | | | |

### Diskussion der Versuchsergebnisse:

Mit den Polyesterpolyolen der Beispiele 1 bis 7, 9 und 10 lassen sich in Kombination mit wasserverdünnbaren aliphatischen Polyisocyanaten wässrige Zweikomponenten-Polyurethanlacke herstellen, die eine ausreichend lange Verarbeitungszeit besitzen, nach Applikation auf ein Substrat schnell trocknen und glänzende bis hoch glänzende Lackfilme liefern. Dabei haben die Lacke auf Basis der Polyester I bis VII durchweg eine schnellere Trocknung, eine höhere Härte und eine bessere Lösemittelbeständigkeit als die Lacke auf Basis der Vergleichspolyester IX und X. Von entscheidender Bedeutung ist jedoch die wesentlich bessere Wasserbeständigkeit der Lackfilme auf Basis der erfindungsgemäßen wässrigen Lösungen oder Dispersionen im Vergleich zu den Lacken auf Basis der Vergleichspolyester.

## Patentansprüche

1. Wässrige Lösungen oder Dispersionen enthaltend Polyesterpolyole,
• die Struktureinheiten der allgemeinen Formel (I) enthalten, 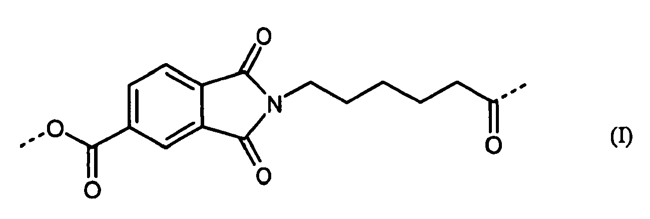
• und/oder die Struktureinheiten der allgemeinen Formel (II) enthalten, 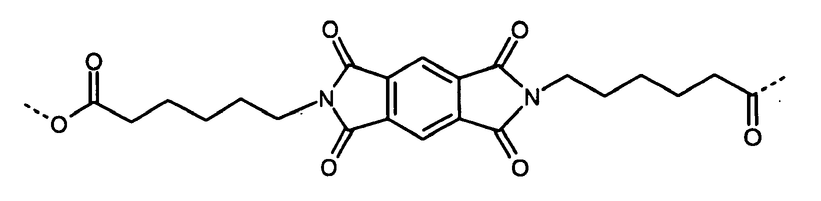
**dadurch gekennzeichnet, dass** die Polyesterpolyole freie Hydroxyl- und Carboxylgruppen aufweisen und die Säurezahl 20 bis 60 mg KOH/g beträgt.

2. Wässrige Lösungen oder Dispersionen enthaltend Polyesterpolyole, die als Endgruppen
• Struktureinheiten der allgemeinen Formel (III) enthalten, 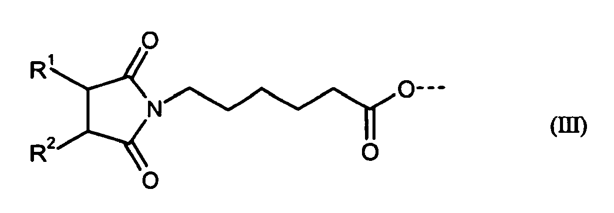
• und/oder Struktureinheiten der allgemeinen Formel (IV) enthalten, 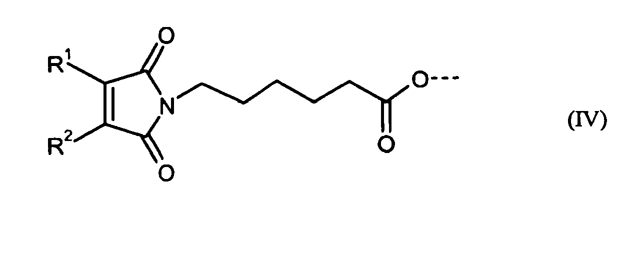
in welchen
R¹, R² unabhängig voneinander gleich oder verschieden sind und
• für Wasserstoff, Halogen, gegebenenfalls substituierte C₁-C₁₈-Alkyl-, C₂-C₁₈₋Alkenyl, C₂-C₁₈-Alkinyl, C₃-C₁₂-Cycloalkyl-, C₃-C₁₂-Heterocycloalkyl-, C₆₋C₂₄-Aryl-, C₆-C₂₄-Heteroaryl-, C₁-C₁₈-Alkoxy-, C₁-C₁₈-Alkylthio-, C₁-C₁₈₋Alkylamino-Reste stehen
oder
• mit dem verbindenden C-Atom des C₄N-Fünfringes ein C₃-C₁₂-Cycloalkyl- oder C₂-C₁₃-Heterocycloalkylrest bilden, der gegebenenfalls Sauerstoff, Stickstoff und/oder Schwefel enthält
oder
• beide zusammen mit den verbindenden C-Atomen des C₄N-Fünfringes ein annelliertes cyclisches oder polycyclisches Ringsystem bilden, welches gesättigt, ungesättigt, teilweise oder vollständig aromatisch ist, gegebenenfalls substituiert ist und gegebenenfalls Sauerstoff, Stickstoff und/oder Schwefel enthält,
**dadurch gekennzeichnet, dass** die Polyesterpolyole freie Hydroxyl- und Carboxylgruppen aufweisen und die Säurezahl 20 bis 60 mg KOH/g beträgt.

3. Polyesterpolyole gemäß Anspruch 1 oder 2, **dadurch gekennzeichnet, dass** die Hydroxylzahl von 10 bis 400 mg KOH/g beträgt.

4. Verfahren zur Herstellung der wässrigen Lösungen oder Dispersionen gemäß Anspruch 1 durch
(I) Umsetzung eines Anhydrids der Trimellitsäure und/oder der Pyromellitsäure mit einem cyclischen Lactam (B),
(II) Aufbau eines hydroxyfunktionellen Polyesters durch Zugabe einer Alkoholkomponente (C) enthaltend
- ein oder mehrere aliphatische oder cycloaliphatische C₃-C₁₀-Polyole mit einer Funktionalität größer 2 (C1), und/oder
- ein oder mehrere aliphatische oder cycloaliphatische C₂-C₁₈-Diole (C2) und
- gegebenenfalls ein oder mehrere aliphatische, cycloaliphatische oder araliphatische monofunktionelle C₁-C₁₈-Alkohole (C3),
sowie gegebenenfalls Zugabe einer Säurekomponente (A) enthaltend
- ein oder mehrere difunktionelle Carbonsäuren oder deren Anhydride (A1), und/oder
- ein oder mehrere polyfunktionelle Carbonsäuren oder deren Anhydride (A2) und
- gegebenenfalls ein oder mehrere Monocarbonsäuren (A3),
wobei anschließend der hydroxyfunktionelle Polyester entweder in Wasser eingetragen oder umgekehrt das Wasser zu dem Polyesterpolyol gerührt wird und ein Neutralisationsmittel vor, während oder nach der Überführung des Polyesterpolyols in die wässrige Phase zugegeben wird.

5. Verfahren zur Herstellung der wässrigen Lösungen oder Dispersionen gemäß Anspruch 2 durch
(I) Umsetzung eines Anhydrids einer difunktionellen Carbonsäure (A1) mit einem cyclischen Lactam (B),
(II) Aufbau eines hydroxyfunktionellen Polyesters durch Zugabe einer Alkoholkomponente (C) enthaltend
- ein oder mehrere aliphatische oder cycloaliphatische C₃-C₁₀-Polyole mit einer Funktionalität größer 2 (C1), und/oder
- ein oder mehrere aliphatische oder cycloaliphatische C₂-C₁₈-Diole (C2) und
- gegebenenfalls ein oder mehrere aliphatische, cycloaliphatische oder araliphatische monofunktionelle C₁-C₁₈-Alkohole (C3),
sowie gegebenenfalls durch Zugabe einer Säurekomponente (A) enthaltend
- ein oder mehrer difunktionelle Carbonsäuren oder deren Anhydride (A1), und/oder
- ein oder mehrere polyfunktionelle Carbonsäuren oder deren Anhydride (A2) und
- gegebenenfalls ein oder mehrerer Monocarbonsäuren (A3),
wobei anschließend der hydroxyfunktionelle Polyester entweder in Wasser eingetragen oder umgekehrt das Wasser zu dem Polyesterpolyol gerührt wird und ein Neutralisationsmittel vor, während oder nach der Überführung des Polyesterpolyols in die wässrige Phase zugegeben wird.

6. Verfahren gemäß der Ansprüche 4 oder 5, **dadurch gekennzeichnet, dass** in einer dritten Stufe die Umsetzung des hydroxyfunktionellen Polyesters aus Stufe (II) mit einem Carbonsäureanhydrid, ausgewählt aus der Gruppe der 2fach-funktionellen Carbonsäuren (A1) und/oder 3fach-funktionellen Carbonsäuren (A2'), unter Ringöffnung und Halbesterbildung erfolgt.

7. Beschichtungsmittel, enthaltend wässrige Lösungen oder Dispersionen gemäß Anspruch 1 und/oder 2.

8. Verfahren zur Herstellung von Beschichtungsmitteln gemäß Anspruch 7, bei dem in Lösungen oder Dispersionen nach Anspruch 1 und/oder 2 ein oder mehrere gegebenenfalls blockierte Polyisocyanate, gegebenenfalls weitere Bindemittel und Hilfs- und Zusatzstoffe eingerührt oder einemulgiert werden.

9. Verwendung von Beschichtungsmitteln gemäß Anspruch 7 zur Lackierung und/oder Verklebung von Substraten.

10. Substrate, beschichtet mit Beschichtungsmitteln gemäß Anspruch 7.

## Claims

1. Aqueous solutions or dispersions containing polyester polyols
• which contain structural units of the general formula (I), 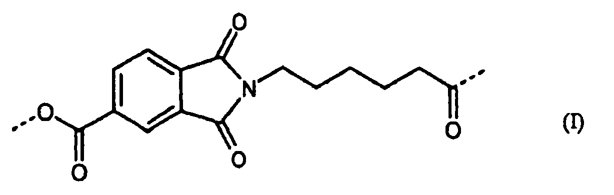
• and/or which contain structural units of the general formula (II), 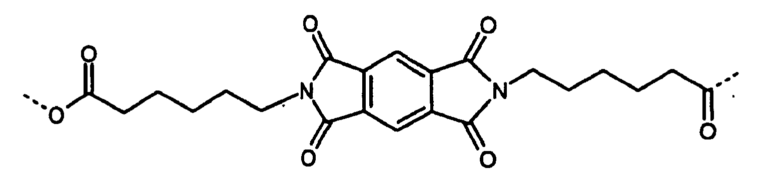
**characterised in that** the polyester polyols comprise free hydroxyl and carboxyl groups and the acid value amounts to 20 to 60 mg of KOH/g.

2. Aqueous solutions or dispersions containing polyester polyols, which contain as end groups
• structural units of the general formula (III), 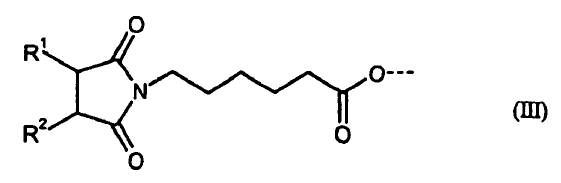
• and/or structural units of the general formula (IV), 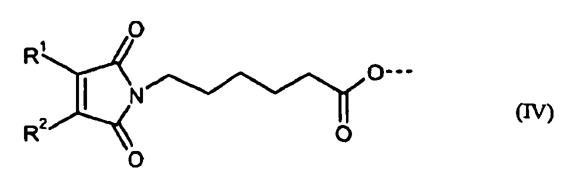
in which
R¹, R² are mutually independently identical or different and
• denote hydrogen, halogen, optionally substituted C₁-C₁₈ alkyl, C₂-C₁₈ alkenyl, C₂-C₁₈ alkynyl, C₃-C₁₂ cycloalkyl, C₃-C₁₂ heterocycloalkyl, C₆-C₂₄ aryl, C₆-C₂₄ heteroaryl, C₁-C₁₈ alkoxy, C₁-C₁₈ alkylthio, C₁₋C₁₈ alkylamino residues
or,
• with the connecting C atom of the C₄N five-membered ring, form a C₃-C₁₂ cycloalkyl or C₂-C₁₃ heterocycloalkyl residue which optionally contains oxygen, nitrogen and/or sulfur
or
• the two, with the connecting C atoms of the C₄N five-membered ring, together form a fused cyclic or polycyclic ring system which is saturated, unsaturated, partially or completely aromatic, is optionally substituted and optionally contains oxygen, nitrogen and/or sulfur,
**characterised in that** the polyester polyols comprise free hydroxyl and carboxyl groups and the acid value amounts to 20 to 60 mg of KOH/g.

3. Polyester polyols according to claim 1 or claim 2, **characterised in that** the hydroxyl value amounts to 10 to 400 mg of KOH/g.

4. A process for the production of the aqueous solutions or dispersions according to claim 1 by
(I) reaction of an anhydride of trimellitic acid and/or of pyromellitic acid with a cyclic lactam (B),
(II) synthesis of a hydroxy-functional polyester by addition of an alcohol component (C) containing
- one or more aliphatic or cycloaliphatic C₃-C₁₀ polyols with a functionality of greater than 2 (C1), and/or
- one or more aliphatic or cycloaliphatic C₂-C₁₈ diols (C2) and
- optionally one or more aliphatic, cycloaliphatic or araliphatic monofunctional C₁-C₁₈ alcohols (C3),
and optionally addition of an acid component (A) containing
- one or more difunctional carboxylic acids or the anhydrides thereof (A1), and/or
- one or more polyfunctional carboxylic acids or the anhydrides thereof (A2) and
- optionally one or more monocarboxylic acids (A3),
wherein the hydroxy-functional polyester is then either introduced into water or conversely the water is stirred into the polyester polyol and a neutralising agent is added before, during or after conversion of the polyester polyol into the aqueous phase.

5. A process for the production of the aqueous solutions or dispersions according to claim 2 by
(I) reaction of an anhydride of a difunctional carboxylic acid (A1) with a cyclic lactam (B),
(II) synthesis of a hydroxy-functional polyester by addition of an alcohol component (C) containing
- one or more aliphatic or cycloaliphatic C₃ -C₁₀ polyols with a functionality of greater than 2 (C1), and/or
- one or more aliphatic or cycloaliphatic C₂-C₁₈ diols (C2) and
- optionally one or more aliphatic, cycloaliphatic or araliphatic monofunctional C₁-C₁₈ alcohols (C3),
and optionally by addition of an acid component (A) containing
- one or more difunctional carboxylic acids or the anhydrides thereof (A1), and/or
- one or more polyfunctional carboxylic acids or the anhydrides thereof (A2) and
- optionally one or more monocarboxylic acids (A3),
wherein the hydroxy-functional polyester is then either introduced into water or conversely the water is stirred into the polyester polyol and a neutralising agent is added before, during or after conversion of the polyester polyol into the aqueous phase.

6. A process according to claim 4 or claim 5, **characterised in that**, in a third stage, the reaction of the hydroxy-functional polyester from stage (II) with a carboxylic anhydride, selected from among the group of difunctional carboxylic acids (A1) and/or trifunctional carboxylic acids (A2'), proceeds with ring-opening and semi-ester formation.

7. A coating agent containing aqueous solutions or dispersions according to claim 1 and/or claim 2.

8. A process for the production of coating agents according to claim 7, in which one or more optionally blocked polyisocyanates, optionally further binders and auxiliary substances and additives are stirred or emulsified into solutions or dispersions according to claim 1 and/or claim 2.

9. Use of coating agents according to claim 7 for coating and/or adhesive bonding of substrates.

10. Substrates coated with coating agents according to claim 7.

## Revendications

1. Solutions aqueuses ou dispersions contenant des polyesterpolyols,
• qui contiennent des unités structurelles de la formule générale (I), 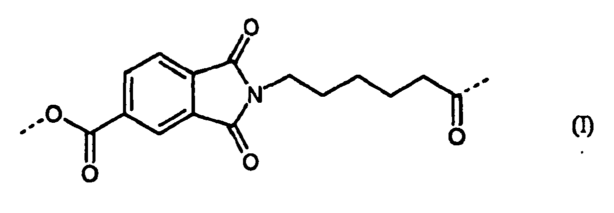
• et/ou qui contiennent des unités structurelles de la formule générale (II), 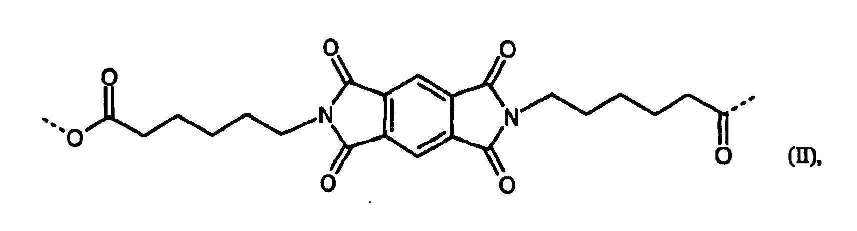
**caractérisées en ce que** les polyesterpolyols présentent des groupes hydroxyles et carboxyles libres et **en ce que** l'indice d'acidité est de 20 à 60 mg de KOH/g.

2. Solutions aqueuses ou dispersions contenant des polyesterpolyols qui, en tant que groupes terminaux,
• contiennent des unités structurelles de la formule générale (III), 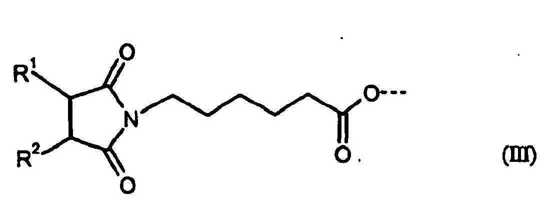
• et/ou contiennent des unités structurelles de la formule générale (IV), 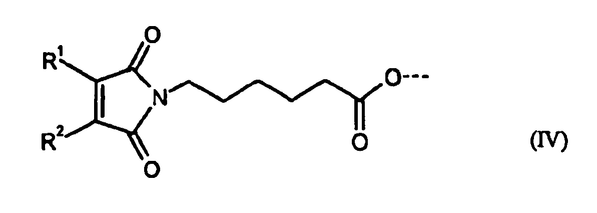
dans lesquelles
R¹, R² sont indépendants l'un de l'autre identiques ou différents et
• représentent l'hydrogène, un halogène, des restes alcényles en C₂-C₁₈, alcynyles en C₂-C₁₈, cycloalkyles en C₃-C₁₂, hétérocycloalkyles en C₃-C₁₂, aryles en C₆-C₂₄, hétéroaryles en C₆-C₂₄, alcoxy en C₁-C₁₈, alkylthio en C₁-C₁₈, alkylamino en C₁-C₁₈, le cas échéant substitués,
ou
• forment avec l'atome de C de liaison du noyau pentagonal en C₄N un reste cycloalkyle en C₃-C₁₂ ou hétérocycloalkyle en C₂-C₁₃, qui contient le cas échéant de l'oxygène, de l'azote et/ou du soufre,
ou
• forment les deux ensemble avec les atomes de C de liaison du noyau pentagonal en C₄N une combinaison cyclique condensée cyclique ou polycyclique, laquelle est saturée, insaturée, partiellement ou entièrement aromatique, le cas échéant substituée et contient le cas échéant de l'oxygène, de l'azote et/ou du soufre,
**caractérisées en ce que** les polyesterpolyols présentent des groupes hydroxyles et carboxyles libres et **en ce que** l'indice d'acidité est de 20 à 60 mg de KOH/g.
contiennent des unités structurelles de la formule générale (III),

3. Polyesterpolyols suivant la revendication 1 ou 2, **caractérisés en ce que** l'indice hydroxyle est de 10 à 400 mg KOH/g.

4. Procédé de fabrication des solutions aqueuses ou dispersions suivant la revendication 1 par
(I) réaction d'un anhydride de l'acide trimellitique et/ou de l'acide pyromellitique avec un lactame cyclique (B),
(II) formation d'un polyester à fonction hydroxyle par addition d'un composant alcool (C) contenant
- un ou plusieurs polyols aliphatiques ou cycloaliphatiques en C₃-C₁₀ avec une fonctionnalité supérieure à 2 (C1), et/ou
un ou plusieurs diols aliphatiques ou cycloaliphatiques en C₂-C₁₈ (C2) et
- le cas échéant un ou plusieurs alcools monofonctionnels aliphatiques, cycloaliphatiques ou araliphatiques en C₁-C₁₈ (C3),
ainsi que le cas échéant par addition d'un composant acide (A) contenant
- un ou plusieurs acides carboxyliques bifonctionnels ou leurs anhydrides (A1), et/ou
- un ou plusieurs acides carboxyliques polyfonctionnels ou leurs anhydrides (A2) et
- le cas échéant un ou plusieurs acides monocarboxyliques (A3),
le polyester à fonction hydroxyle étant ensuite introduit dans l'eau ou inversement l'eau mélangée avec le polyesterpolyol et un agent de neutralisation étant ajouté avant, pendant ou après le transfert du polyesterpolyol dans la phase aqueuse.

5. Procédé de fabrication des solutions aqueuses ou dispersions suivant la revendication 2 par
(I) réaction d'un anhydride d'un acide carboxylique bifonctionnel (A1) avec un lactame cyclique (B),
(II) formation d'un polyester à fonction hydroxyle par addition d'un composant alcool (C) contenant
- un ou plusieurs polyols aliphatiques ou cycloaliphatiques en C₃-C₁₀ avec une fonctionnalité supérieure à 2 (C1), et/ou
- un ou plusieurs diols aliphatiques ou cycloaliphatiques en C₂-C₁₈ (C2) et
- le cas échéant un ou plusieurs alcools monofonctionnels aliphatiques, cycloaliphatiques ou araliphatiques en C₁-C₁₈ (C3),
ainsi que le cas échéant par addition d'un composant acide (A) contenant
- un ou plusieurs acides carboxyliques bifonctionnels ou leurs anhydrides (A1), et/ou
- un ou plusieurs acides carboxyliques polyfonctionnels ou leurs anhydrides (A2) et
- le cas échéant un ou plusieurs acides monocarboxyliques (A3),
le polyester à fonction hydroxyle étant ensuite introduit dans l'eau ou inversement l'eau mélangée avec le polyesterpolyol et un agent de neutralisation étant ajouté avant, pendant ou après le transfert du polyesterpolyol dans la phase aqueuse.

6. Procédé suivant les revendications 4 ou 5, **caractérisé en ce qu'**on réalise dans une troisième étape la réaction du polyester à fonction hydroxyle de l'étape (II) avec un anhydride d'acide carboxylique, sélectionné parmi le groupe des acides carboxyliques bifonctionnels (A1) et/ou des acides carboxyliques trifonctionnels (A2'), avec ouverture du cycle et formation d'un semi-ester.

7. Produit de revêtement, contenant des solutions aqueuses ou dispersions suivant la revendication 1 et/ou 2.

8. Procédé de fabrication de produits de revêtement suivant la revendication 7, pour lequel on mélange ou émulsifie dans des solutions ou dispersions suivant la revendication 1 et/ou 2 un ou plusieurs polyisocyanates le cas échéant bloqués, le cas échéant d'autres liants et des agents auxiliaires et additifs.

9. Utilisation de produits de revêtement suivant la revendication 7 pour le vernissage et/ou le collage de substrats.

10. Substrats, revêtus de produits de revêtement suivant la revendication 7.
